(19) Europäisches Patentamt

European Patent Office

Office européen des brevets

(11) **EP 0 878 476 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.$^7$: **C07F 7/12**

(21) Anmeldenummer: **98108033.6**

(22) Anmeldetag: **02.05.1998**

(54) **Verfahren zur Herstellung von Dimethylmonochlorsilan**

Process for preparing dimethylchlorosilane

Procédé pour la préparation du diméthylchlorosilane

(84) Benannte Vertragsstaaten:
**AT BE DE FR GB IT NL**

(30) Priorität: **17.05.1997 DE 19720890**

(43) Veröffentlichungstag der Anmeldung:
**18.11.1998 Patentblatt 1998/47**

(73) Patentinhaber: **Goldschmidt AG**
**45127 Essen (DE)**

(72) Erfinder:
- **Dröse, Jürgen**
  **45141 Essen (DE)**
- **Knott, Wilfried, Dr.**
  **45141 Essen (DE)**
- **Wolfgram, Dirk**
  **44879 Bochum (DE)**

(56) Entgegenhaltungen:
EP-A- 0 652 221      DE-A- 4 442 753
DE-C- 4 239 246      US-A- 4 115 426

- SIMON, G. ET AL.: "NOUVELLES SYNTHESES DE ME2SICL2 ET ME3SICL" JOURNAL OF ORGANOMETALLIC CHEMISTRY, Bd. 206, 1981, Seiten 279-286, XP002073405

**Beschreibung**

Die Erfindung betrifft ein Verfahren zur Herstellung von Dimethylmonochlorsilan $(CH_3)_2Si(H)Cl$, erhalten durch partielle Hydrierung von Dimethyldichlorsilan $(CH_3)_2SiCl_2$ in einem Reaktionssystem, bestehend aus Magnesiumhydrid und Aluminiumchlorid und einem organischen Lösungsmittel unter ständiger Aufmahlung.

Alkylhydrogenchlorsilane sind als Ausgangsmaterialien in der technischen Organosiliciumchemie von großem Interesse. Durch Kombination von Hydrosilylierungs- und Hydrolyseschritten eröffnen sie ein Mannigfach der kommerziell interessanten funktionalisierten Silicone.

Dimethylmonochlorsilan (DMMCS) und Methyldichlorsilan fallen als Nebenprodukte der Rochow-Synthese an und sind vom Hauptprodukt Dimethydichlorsilan (DDS) abzutrennen (K. Schnurrbusch, Ullmanns Encyclopädie der Technischen Chemie, Band 15, Urban & Schwarzenberg-Verlag, S. 748-769 (1964)). Die auf hohe DDS-Ausbeute optimierte Direktsynthese ist als Quelle der begehrten Chlorwasserstoffsilane jedoch nur sehr begrenzt nutzbar.

Ein weiterer Zugang zu Dimethylmonochlorsilan ergibt sich aus der katalytischen Spaltung von Organochlordisilanen, die im Rückstand der Direktsynthese vorliegen (M. Wick, G. Kreis, F.-H. Kreuzer, Ullmanns Encyclopädie der Technischen Chemie, Band 2, 4. Auflage, Verlag Chemie, S. 485-508 (1982)).

Etliche Verfahren zur Überführung von DDS in DMMCS mit Hilfe von Metallhydriden sind in der Literatur referiert. Die JP 89-158938 lehrt ein Verfahren zur partiellen Hydrierung von DDS mit Lithiumhydrid in einer LiCl/KCl-Schmelze bei 355 °C bis 470 °C, wobei Ausbeuten zwischen 8 % und 17 % DMMCS erhalten werden. Unter dem Aspekt des Energieeinsatzes ist dieses Verfahren wenig attraktiv.

Die US-A-4 115 426 beschreibt den Einsatz des Reduktionssystems $NaH/NaBH_4$ in Hexamethylphosphorsäuretriamid (HMPTA) im Temperaturbereich zwischen 40 °C und 80 °C, wobei Dimethylmonochlorsilan in einer Ausbeute von 71 % entsteht. Das extreme Cancerogen (HMPTA) schränkt eine breite industrielle Nutzung dieser Methode ein.

Zur partiellen Hydrierung von DDS sind Kombinationen aus Calciumhydrid $CaH_2$ und Aluminiumchlorid bzw. Titanhydrid $TiH_2$ und Aluminiumchlorid beschrieben, die bei 250 °C und 300 °C im Autoklaven wechselnde Mischungen aus DDS, DMMCS, Trimethylchlorsilan und Methylchlorsilan sowie gasförmigen Nebenprodukten ergeben (J. Organomet. Chem. 206(3), S. 279-286 (1981)). Die Reaktionszeiten dieser Hochtemperaturprozesse sind sehr lang und betragen 17 bis 90 Stunden.

Hengge et al. beschreibt die Möglichkeit, teilhydrierte Organo-Silicium-Halogen-Verbindungen in einem System, bestehend aus Trialkylstannylchlorid/Natriumhydrid mit Diethylenglykoldialkylether als Solvens herzustellen. Die bereits bei Raumtemperatur verlaufende Reaktion verlangt den katalytischen Zusatz von Bipyridyl bzw. $\lambda^3$-Phosphorverbindungen und ergibt z. B. bei Einsatz von Methyltrichlorsilan in 55 % Ausbeute Methylchlorsilan neben Methylsilan und Methyldichlorsilan.

Die DE-A-44 42 753 beansprucht Alkylhydrogenchlorsilane des Typs $R_{(4-n-m)}SiCl_nH_m$, erhältlich durch katalytische Umsetzung der entsprechenden Alkylchlorsilane $R_{(4-p)}SiCl_p$ mit Wasserstoff in der Gasphase bei Temperaturen zwischen 100 °C und 600 °C und unter Druck, wobei als Katalysatoren die Metalle Nickel und/oder Ruthenium und/oder Rhodium und/oder Palladium und/oder Platin selbst oder in trägerfixierter Form zum Einsatz kommen. Dieses Verfahren führt bei Einsatz von DDS zu Gemischen, bestehend aus Dimethylmonochlorsilan, Methyldichlorsilan und Trimethylchlorsilan, wobei bei sehr geringen DDS-Umsätzen (3,9 % bis 14,8 %) und Selektivitäten von 27,2 % bis 40,8 % maximale Ausbeuten von 4,0 % Dimethylmonochlorsilan erzielt werden. Aus diesem Grund bedarf der Prozess zur Erzielung isolierbarer Mengen Zielproduktes einer aufwendigen apparativen Kreislaufführung, wobei die selektive Ausschleusung des in der Reaktionsmatrix beim Durchlaufen bereits gebildeten DMMCS eine besondere Schwierigkeit besitzt.

Gemäß EP-A-0 652 221 wird ausgehend von Dimethyldichlorsilan ein Gemisch aus Dimethylchlorsilan und Triorganochlorsilan erzeugt, wobei vorwiegend letzteres erhalten wird. Als Reduktionsmittel wird Trialkylsilan eingesetzt.

DE-C-42 39 246 beschreibt die Herstellung von SiH-Siloxanen, ausgehend von den entsprechenden Si-Halogen-Gruppen enthaltenden Organopolysiloxanen. Als Reduktionsmittel dienen Etherkomplexe der allgemeinen Formel

$$\left[ Mg_2X_3(Ether)_y \right]^+ \left[ AlH_{4-n}X_n \right]^-$$

wobei X Chlor, Brom oder Jod ist,
Ether einen aliphatischen oder cycloaliphatischen Ether bedeutet,

y eine Zahl von 0 bis 6 und

n eine Zahl von 1 bis 3 ist.

Vor diesem Stand der Technik lag daher der vorliegenden Erfindung die technische Aufgabe zugrunde, ein Verfahren zur partiellen Hydrierung von Dimethyldichlorsilan zu entwickeln, das unter den Gesichtspunkten Wirtschaftlichkeit, Arbeitssicherheit und Ausbeute fortschrittlich ist.

Die DE-C-43 13 130 lehrt ein Verfahren zur Herstellung von Silanen bzw. Organosiliciumhydriden durch Reduktion mit einem Magnesiumhydrid in einem flüssigen Reaktionsmedium, gekennzeichnet durch die Kombination folgender Merkmale:

Verwendung von nichtpyrophorem Magnesiumhydrid, Verwendung von üblichen Ethern als Reaktionsmedium, kontinuierliche Entfernung des sich auf der Oberfläche der Magnesiumhydridteilchen während der Umsetzung abscheidenden Magnesiumhalogenids durch Einwirkung von mechanischer Energie oder Ultraschall, wobei als bevorzugtes Merkmal ein Magnesiumhydrid Verwendung findet, das durch Autokatalyse hergestellt wurde.

Unpolare Reaktionsmedien, wie z. B. aliphatische bzw. cycloaliphatische Kohlenwasserstoffe, eignen sich nicht zur Herstellung von Silanen bzw. Organosiliciumhydriden gemäß diesem charakterisierten Verfahren (s. Vergleichsbeispiel 1, Versuch zur Reduktion von Dimethyldichlorsilan).

Überraschenderweise wurde nun gefunden, daß sich Dimethyldichlorsilan mit $MgH_2$ unter Einwirkung von Mahlenergie in unpolaren Reaktionsmedien dann zu Silangemischen mit einem hohen Anteil an Dimethylmonochlorsilan umsetzen läßt, wenn dem Reaktionssystem eine adäquate Menge Aluminiumhalogenid zugesetzt wird.

Vorteilhaft wird ein nichtpyrophores, autokatalytisch hergestelltes Magnesiumhydrid eingesetzt, welches gemäß DE-A-40 39 278 aus einem feinteiligen Magnesium durch Hydrierung hergestellt wird, wobei man als Katalysator Magnesiumhydrid einer Teilchengröße von $\leq 400$ µm in einer Menge von mindestens 1,2 Gew.-%, bezogen auf zu hydrierendes Magnesium, zusetzt und die Hydrierung bei einer Temperatur von $\geq 250\,°C$ und einem Druck von 0,5 bis 5,0 Mpa unter Rühren des Reaktionsgutes durchführt.

Nach dem erfindungsgemäßen Verfahren werden die Reaktanden DDS und $MgH_2$ in molaren Verhältnissen von 1 : 0,5 bis 1 : 1,5 umgesetzt. Bevorzugt wählt man die Stöchiometrie im Bereich zwischen 1 : 0,8 bis 1 : 1, damit einerseits durch eine große Hydridkonzentration die Reaktion beschleunigt verläuft, andererseits ein zu hoher Feststoffgehalt in der Reaktionsmischung vermieden wird.

Die zugesetzte Aluminiumchloridmenge soll nach dem erfindungsgemäßen Verfahren zwischen 1 Mol-% und 30 Mol-%, bevorzugt zwischen 5 Mol-% und 15 Mol-%, bezogen auf die Menge eingesetzten Dimethyldichlorsilans, betragen. Die untere Grenzkonzentration von $AlCl_3$ sollte erfahrungsgemäß 5 Mol-% nicht unterschreiten, da sonst infolge der Desaktivierung der Aluminiumkomponente die Reaktion bereits in einem frühen Stadium zum Erliegen kommt und ein "Nachsalzen" unerläßlich wird.

Als Reaktionsmedien eignen sich Alkane, Cycloalkane, Aromaten und Alkylaromaten. Bevorzugt wird Dekalin als inertes, toxikologisch unbedenkliches Lösungsmittel eingesetzt, da es aufgrund seines hohen Siedepunktes (Kp. 190 °C) eine Reaktionsführung über einen weiten Temperaturbereich gestattet.

Die Reduktion des Dimethyldichlorsilans wird bei Temperaturen zwischen 50 °C und 200 °C vorgenommen, wobei sich durch sukzessives Auskondensieren der flüchtigen Reaktionsprodukte ein reaktionstypischer Temperaturverlauf ergibt.

Es erweist sich als zweckmäßig, alle Reaktanden vor Reaktionsbeginn vorzulegen. Wählt man alternativ den Weg, Dimethyldichlorsilan in das bereits erhitzte Reaktandengemisch, bestehend aus $MgH_2$/ $AlCl_3$, einzutropfen, beobachtet man die vorzeitige Abscheidung eines Aluminiumspiegels an der Reaktorinnenwand.

Das aus der Hydridreduktion erhaltene Silangemisch läßt sich destillativ trennen, so daß man je nach Aufwand Dimethylmonochlorsilan in beliebiger Reinheit isolieren kann.

Wird die Isolierung von Dimethylmonochlorsilan in Substanz nicht zwingend gewünscht, bietet sich beispielsweise die hydrolytische Aufarbeitung des Silangemisches an, wobei etwaig darin enthaltenes Dimethyldichlorsilan unter HCl-Abspaltung und Kondensation $\alpha,\omega$-Bis-hydroxy-polydimethylsiloxan und Dimethylmonochlorsilan unter HCl-Freisetzung Tetramethyldisiloxan bilden. Im neutralen bis stark sauren Milieu reagiert Dimethylsilan nicht und kann somit separat aufgefangen werden.

Beispiel 1

(Vergleichsbeispiel)

129 g (1,0 Mol) Dimethyldichlorsilan und 27,7 g (1,0 Mol) Magnesiumhydrid (autokatalytisch hergestelltes Magnesiumhydrid, Hydridgehalt 95 %) werden in 300 g Dekalin suspendiert und in einer 500-ml-Laborkugelmühle bei ca. 1000 U/min zur Aufmahlung gebracht.

Die Reaktionsmischung wird aufgeheizt und 4,5 h auf Rückfluß gehalten.

Es konnten keine gasförmigen Reaktionsprodukte in einer nachgeschalteten Tieftemperaturkühlfalle aufgefangen werden.

Beispiel 2

(Apparatur ohne Kühler)

129 g (1,0 Mol) Dimethyldichlorsilan, 13,3 g (0,1 Mol) wasserfreies Aluminiumchlorid und 22,2 g (0,8 Mol) Magnesiumhydrid (autokatalytisch hergestelltes Magnesiumhydrid, Hydridgehalt 95 %) werden in 250 g Dekalin suspendiert und in einer 500-ml-Laborkugelmühle bei ca. 1000 U/min aufgemahlen.
Unter weiterer ständiger Aufmahlung wird zügig auf 80 °C aufgeheizt, wobei die Kondensation der entwickelten Gase in einer nachgeschalteten Kühlfalle (-78 °C) zu beobachten ist.
Nach einer Reaktionszeit von ca. 1,5 h ist eine erhebliche Abnahme der Kondensationsgeschwindigkeit zu beobachten (95 ml Kondensat).
Zum Austreiben des restlichen Silans wird die Reaktionstemperatrur erhöht, bis nach weiteren 30 min und einer Endtemperatur von 120 °C die Reaktion abgeschlossen ist.
Das gewonnene Kondensat (84 g, 95 ml) setzt sich gemäß $^1$H- und $^{29}$Si-NMR-Analytik aus 53 % Dimethylmonochlorsilan neben 30 % Dimethylsilan und 17 % Dimethyldichlorsilan zusammen.
Die Dimethylmonochlorsilan-Ausbeute beträgt somit 47 Mol-% bei einem Dimethyldichlorsilan-Umsatz von 89 %.

Beispiel 3

129 g (1,0 Mol) Dimethyldichlorsilan, 13,3 g (0,1 Mol) wasserfreies Aluminiumchlorid und 22,2 g (0,8 Mol) Magnesiumhydrid (autokatalytisch hergestelltes Magnesiumhydrid, Hydridgehalt 95 %) werden in 250 g Dekalin suspendiert und in einer 500-ml-Laborkugelmühle bei ca. 1000 U/min aufgemahlen.
Unter weiterer ständiger Aufmahlung wird zügig auf 90 °C aufgeheizt, wobei die Kondensation der entwickelten Gase in einer nachgeschalteten Kühlfalle (-78 °C) zu beobachten ist.
Nach einer Reaktionszeit von ca. 3 h und einer Endtemperatur von 120 °C ist die Reaktion abgeschlossen.
Das gewonnene Kondensat (74 g, 85 ml) setzt sich gemäß $^1$H- und $^{29}$Si-NMR-Analytik aus 62 % Dimethylmonochlorsilan neben 35 % Dimethylsilan und 3 % Dimethyldichlorsilan zusammen.
Die Dimethylmonochlorsilan-Ausbeute -Ausbeute beträgt somit 49 Mol-% bei einem Dimethyldichlorsilan-Umsatz von 92 %.

**Patentansprüche**

1. Verfahren zur Herstellung von Dimethylmonochlorsilan $(CH_3)_2Si(H)Cl$ durch partielle Hydrierung von Dimethyldichlorsilan $(CH_3)_2SiCl_2$ mit Magnesiumhydrid und Aluminiumchlorid unter ständiger Aufmahlung in einem organischen Lösungsmittel.

2. Verfahren nach Anspruch 1, **dadurch gekennzeichnet, daß** das eingesetzte Magnesiumhydrid ein nichtpyrophores, autokatalytisch hergestelltes Magnesiumhydrid ist.

3. Verfahren nach Anspruch 1 und 2, **dadurch gekennzeichnet, daß** die Aluminumchloridmenge zwischen 1 Mol-% und 30 Mol-%, bevorzugt zwischen 5 Mol-% und 15 Mol-%, bezogen auf die Menge eingesetzten Dimethyldichlorsilans, beträgt.

4. Verfahren nach Anspruch 1 bis 3, **dadurch gekennzeichnet, daß** als organische Lösungsmittel Alkane, Cycloalkane, Aromaten und Alkylaromaten eingesetzt werden.

5. Verfahren nach Anspruch 1 bis 4, **dadurch gekennzeichnet, daß** als organisches Lösungsmittel Dekalin eingesetzt wird.

6. Verfahren nach Anspruch 1 bis 5, **dadurch gekennzeichnet, daß** die Umsetzung des Dimethyldichlorsilans bei Temperaturen von 50 °C bis 200 °C vorgenommen wird.

**Claims**

1. Process for preparing dimethylmonochlorosilane $(CH_3)_2Si(H)Cl$ by partial hydrogenation of dimethyldichlorosilane $(CH_3)_2SiCl_2$ using magnesium hydride and aluminium chloride while milling continually in an organic solvent.

2. Process according to Claim 1, **characterized in that** the magnesium hydride used is a non-pyrophoric, autocatalytically prepared magnesium hydride.

3. Process according to Claim 1 or 2, **characterized in that** the amount of aluminium chloride is from 1 mol% to 30 mol%, preferably from 5 mol% to 15 mol%, based on the amount of dimethyldichlorosilane used.

4. Process according to any of Claims 1 to 3, **characterized in that** organic solvents used are alkanes, cycloalkanes, aromatics and alkylaromatics.

5. Process according to any of Claims 1 to 4, **characterized in that** the organic solvent used is decalin.

6. Process according to any of Claims 1 to 5, **characterized in that** the reaction of the dimethyldichlorosilane is carried out at temperatures of from 50°C to 200°C.


**Revendications**

1. Procédé pour la préparation de diméthylmono-chlorosilane $(CH_3)_2Si(H)Cl$ par hydrogénation partielle de diméthyl-dichlorosilane $(CH_3)_2SiCl_2$ avec de l'hydrure de magnésium et du chlorure d'aluminium sous broyage continu dans un solvant organique.

2. Procédé selon la revendication 1, **caractérisé en ce que** l'hydrure de magnésium utilisé est un hydrure de magnésium non pyrophore, préparé par voie autocatalytique.

3. Procédé selon les revendications 1 et 2, **caractérisé en ce que** la quantité de chlorure d'aluminium est comprise entre 1% en mole et 30% en mole, de préférence entre 5% en mole et 15% en mole, par rapport à la quantité de diméthyldichlorosilane utilisé.

4. Procédé selon les revendications 1 à 3, **caractérisé en ce qu'**on utilise des alcanes, des cycloalcanes, des aromatiques et des alkylaromatiques comme solvants organiques.

5. Procédé selon les revendications 1 à 4, **caractérisé en ce qu'**on utilise de la décaline comme solvant organique.

6. Procédé selon les revendications 1 à 5, **caractérisé en ce que** la transformation du diméthyldichlorosilane est réalisée à des températures de 50°C à 200°C.